# EUROPÄISCHE PATENTSCHRIFT

(11) **EP 3 378 737 B1**
(45) Veröffentlichungstag und Bekanntmachung des Hinweises auf die Patenterteilung: **21.07.2021**
(21) Anmeldenummer: 18160203.8
(22) Anmeldetag: 06.03.2018
(51) Int. Cl.: B62D 15/02, B60W 30/06

(54) **PARKASSISTENZSYSTEM UND VERFAHREN HIERZU**
PARKING ASSISTANCE SYSTEM AND METHOD FOR THE SAME
SYSTÈME D'AIDE AU STATIONNEMENT ET PROCÉDÉ CORRESPONDANT

(30) Priorität: 21.03.2017 DE 102017002731
(43) Veröffentlichungstag der Anmeldung: 26.09.2018
(73) Patentinhaber: MAN Truck & Bus SE, 80995 München (DE)
(72) Erfinder: Wagner, Philipp, 86316 Friedberg (DE)
(74) Vertreter: v. Bezold & Partner Patentanwälte - PartG mbB

(56) Entgegenhaltungen:
- WO-A1-2018/114244
- DE-A1-102014 213 074
- DE-A1-102015 212 252
- DE-A1-102015 212 581

## Beschreibung

Die Erfindung betrifft ein Verfahren zum Betrieb eines Kraftfahrzeugs, ein Parkassistenzsystem und ein Kraftfahrzeug mit einem Parkassistenzsystem.

Parkassistenzsysteme werden zur Unterstützung des Fahrers eines Kraftfahrzeugs bei Einparkvorgängen verwendet. Es ist beispielsweise bekannt, dass ein Parkassistenzsystem ein Fahrzeug selbstständig in eine Parklücke lenkt. Die Trajektorieberechnung und -umsetzung geschieht durch eine Steuereinheit des Parkassistenzsystems. Der Fahrer übernimmt lediglich die Längssteuerung, d. h., er gibt Gas und bremst das Fahrzeug.

Die DE 10 2013 015 348 A1 offenbart ein gattungsbildendes Verfahren zum Anfahren eines Parkplatzes in einer nicht einsehbaren/straßenfernen Parkzone. In einem Lernmodus werden anhand von Umgebungsdaten oder Fahrdaten mehrere Trajektorien für mindestens einen Heim-Parkplatz ermittelt und gespeichert werden. In einem Betriebsmodus beim Anfahren des mindestens einen Heim-Parkplatzes werden mögliche fahrbare Trajektorien zur Auswahl und Aktivierung ausgegeben.

Aus der DE 10 2014 213074 A1 ist ein Rückfahrassistenzsystem für ein zweispuriges Kraftfahrzeug mit Vorderradlenkung zum Zurückfahren in Rückwärtsrichtung einer zuvor in Vorwärtsrichtung manuell gefahrenen Fahrstrecke bekannt. Das Rückwärtsfahrassistenzsystem erlaubt zumindest ein automatisches Lenken des Kraftfahrzeugs während des Zurückfahrens.

Der Erfindung liegt die Aufgabe zu Grunde, ein verbessertes Verfahren zum Betrieb eines Kraftfahrzeugs und ein verbessertes Parkassistenzsystem zur Unterstützung bei komplexen Parkvorgängen bereitzustellen.

Die Aufgabe wird gelöst durch ein Verfahren zum Betrieb eines Kraftfahrzeugs, insbesondere eines Nutzfahrzeugs, und ein Parkassistenzsystem gemäß den unabhängigen Ansprüchen. Vorteilhafte Weiterbildungen sind in den abhängigen Ansprüchen und der Beschreibung angegeben.

Das Verfahren weist das manuelle Einparken oder Ausparken des Kraftfahrzeugs entlang einer ersten Trajektorie während eines ersten Parkvorgangs, insbesondere Einparkvorgangs, auf. Während des ersten Parkvorgangs wird die erste Trajektorie erfasst. Das Verfahren weist ferner das Bestimmen einer zweiten Trajektorie durch Anwenden eines Glättungsverfahrens auf die erste Trajektorie und/oder durch Anpassen der ersten Trajektorie an während des ersten Parkvorgangs erfasste Umgebungsdaten, insbesondere aus den erfassten Umgebungsdaten ermittelte Hindernisse und/oder hindernisfreie Bereiche, auf.

Das Verfahren ermöglicht die Optimierung der ersten, vom Fahrer manuell vorgegebenen Trajektorie. Die erste Trajektorie kann geglättet werden, um unnötige Lenkausschläge zu vermeiden und einen harmonischen Parkvorgang zu ermöglichen. Die erste Trajektorie kann ferner hinsichtlich der Umgebungsdaten verbessert werden, sodass beispielsweise eine Trajektorie ermöglicht wird, die kürzer als die erste Trajektorie ist. Die optimierte zweite Trajektorie kann beispielsweise bei einem zweiten Parkvorgang in der gleichen Parkumgebung verwendet werden.

Der erste Parkvorgang wird von einem Fahrer des Kraftfahrzeugs ausgeführt. Der erste Parkvorgang kann von einem Parkassistenzsystem unterstützt werden, zum Beispiel in Form von akustischen Signalen, die einen Abstand zu Hindernissen angeben.

Die zweite Trajektorie wird automatisch bestimmt.

Beim Glättungsverfahren wird die erste Trajektorie in eine Trajektorie mit geringerer Krümmung überführt.

Die zweite Trajektorie kann gespeichert werden, um zur Unterstützung bei späteren Parkvorgängen in der gleichen Parkumgebung zur Verfügung zu stehen.

In einer vorteilhaften Weiterbildung besteht die Möglichkeit, für eine Mehrzahl von unterschiedlichen Parkumgebungen jeweils eine erste Trajektorie zu erfassen und eine zweite Trajektorie durch Glätten und/oder Anpassen an Umgebungsbedingungen zu bestimmen. Dies hat den Vorteil, dass mehrere Trajektoriepaarungen bestehend aus einer ersten und zweiten Trajektorie für verschiedene Orte abgespeichert werden können. Eine Benennung der Paarung kann bspw. manuell durch den Benutzer über eine Benutzerschnittstelle vorgenommen werden. Alternativ oder zusätzlich kann eine automatische Benennung bspw. mittels einer von einer Standortbestimmungsvorrichtung bzgl. der jeweiligen Parkumgebung bestimmten Adresse vorgenommen oder dem Benutzer vorgeschlagen werden.

In einer Ausführungsform weist das Verfahren ferner das Bereitstellen der zweiten Trajektorie zur Unterstützung eines Fahrers bei einem zweiten Parkvorgang auf.

Alternativ oder zusätzlich kann die erste Trajektorie und/oder die zweite Trajektorie angezeigt werden. Dies hat den Vorteil, dass der Fahrer des Kraftfahrzeugs über die erste Trajektorie und die zweite Trajektorie informiert werden kann.

Die erste Trajektorie und/oder die zweite Trajektorie kann beispielsweise auf einer Anzeige einer Benutzerschnittstelle des Kraftfahrzeugs angezeigt werden.

In einer weiteren Ausführungsform weist das Anwenden des Glättungsverfahrens das Verwenden einer Spline-Interpolation, insbesondere einer kubischen Spline-Interpolation (Spline-Interpolation dritten Grades), auf. Mithilfe von stückweise stetigen Polynomen kann die erste Trajektorie approximiert und geglättet werden.

In einem Ausführungsbeispiel weist das Verfahren ferner das Erfassen von Umgebungsdaten während des ersten Parkvorgangs und das Ermitteln von hindernisfreien Bereichen und/oder Hindernissen aus den während des ersten Parkvorgangs erfassten Umgebungsdaten auf. Mithilfe der ermittelten hindernisfreien Bereiche und Hindernisse kann die erste Trajektorie vom Fahrer oder von einer Steuereinheit optimiert werden.

Die Umgebungsdaten können von einer Umgebungserfassungssensorik erfasst werden. Die Umgebungserfassungssensorik kann insbesondere ein Kamerasystem und/oder ein oder mehrere Abstandssensoren, zum Beispiel Radarsensoren, Lasersensoren und/oder Ultraschallsensoren, aufweisen.

In einer Ausführungsvariante weist das Anpassen der ersten Trajektorie an die während des ersten Parkvorgangs erfassten Umgebungsdaten eine Verkürzung der ersten Trajektorie innerhalb der ermittelten hindernisfreien Bereiche und/oder eine Anpassung der ersten Trajektorie zur Einhaltung eines vorgegebenen Mindestsicherheitsabstands zu den ermittelten Hindernissen auf.

In einer weiteren Ausführungsvariante weist das Verfahren ferner das manuelle Anpassen der zweiten Trajektorie auf. Das manuelle Anpassen der zweiten Trajektorie wird insbesondere nur innerhalb der als hindernisfrei ermittelten Bereiche ermöglicht. Dies gibt dem Fahrer die Möglichkeit, die bestimmte zweite Trajektorie weiter zu optimieren.

In einem Ausführungsbeispiel weist die zweite Trajektorie eine Endposition, die im Wesentlichen einer Endposition der ersten Trajektorie entspricht, und/oder eine Endausrichtung, die im Wesentlichen einer Endausrichtung der ersten Trajektorie entspricht, auf. Damit wird gewährleistet, dass das Kraftfahrzeug durch die zweite Trajektorie in die gewünschte Zielposition mit der gewünschten Ausrichtung geführt wird.

In einem weiteren Ausführungsbeispiel weist das Erfassen der ersten Trajektorie das Erfassen von Lenkwinkeln des Kraftfahrzeugs, Positionsdaten des Kraftfahrzeugs und/oder Fahrzeuggeschwindigkeiten des Kraftfahrzeugs während des ersten Parkvorgangs auf. Zur Erfassung der ersten Trajektorie können somit bereits für andere Systeme des Kraftfahrzeugs verwendete Sensoren und Systeme verwendet werden.

Die Lenkwinkel können von einem Lenkwinkelsensor, die Positionsdaten des Kraftfahrzeugs von einer Standortbestimmungsvorrichtung und die Fahrzeuggeschwindigkeit des Kraftfahrzeugs von einem Fahrzeuggeschwindigkeitssensor erfasst werden.

In einer vorteilhaften Weiterbildung ist ein Beginn des Erfassens der ersten Trajektorie und/oder ein Ende des Erfassens der ersten Trajektorie von einem Benutzer auslösbar. Der Benutzer kann somit die Startposition und die Endposition der ersten Trajektorie manuell festlegen. Der Benutzer kann insbesondere der Fahrer des Kraftfahrzeugs sein.

Vorzugsweise weist das Verfahren ferner das automatische oder teilweise automatische Führen des Kraftfahrzeugs entlang der zweiten Trajektorie während eines zweiten Parkvorgangs auf. Das teilweise automatische Führen des Kraftfahrzeugs weist insbesondere das automatische Lenken des Kraftfahrzeugs zum Folgen der zweiten Trajektorie auf. Dies ermöglicht eine sichere Führung des Kraftfahrzeugs während des zweiten Parkvorgangs in der gleichen Parkumgebung.

Alternativ oder zusätzlich können Lenk- und/oder Geschwindigkeitsanweisungen an einen Benutzer des Kraftfahrzeugs entsprechend der zweiten Trajektorie während eines zweiten Parkvorgangs vorgegeben werden. Die Lenk- und/oder Geschwindigkeitsanweisungen können insbesondere visuell, akustisch und/oder haptisch ausgegeben werden. Dies hat den Vorteil, dass der Fahrer des Kraftfahrzeugs beim zweiten Parkvorgang unterstützt werden kann, wobei der Fahrer die volle Kontrolle über das Kraftfahrzeug behält.

Der zweite Parkvorgang findet zeitlich nach dem ersten Parkvorgang in der gleichen Parkumgebung (Parkzone) statt. Die Bestimmung, dass sich das Kraftfahrzeug in der gleichen Parkumgebung wie beim ersten Parkvorgang befindet, kann automatisch, zum Beispiel mittels einer Standortbestimmungsvorrichtung, erfolgen. Die Bestimmung kann ebenso manuell vom Fahrer ausgeführt werden, der eine entsprechende Eingabe in eine Benutzerschnittstelle des Kraftfahrzeugs tätigt.

Die Lenk- und/oder Geschwindigkeitsanweisungen können beispielsweise über eine Benutzerschnittstelle des Kraftfahrzeugs ausgegeben werden.

Vorteilhafterweise weist das Verfahren ferner das Erfassen von Umgebungsdaten während des zweiten Parkvorgangs auf. Ferner wird die zweite Trajektorie während des zweiten Parkvorgangs an die während des zweiten Parkvorgangs erfassten Umgebungsdaten dynamisch angepasst oder die zweite Trajektorie wird während des zweiten Parkvorgangs verworfen. Somit können Hindernisse, die während des ersten Parkvorgangs noch nicht vorhanden waren, erkannt und beim zweiten Parkvorgang berücksichtigt werden. Aus Sicherheitsgründen ist es ebenso möglich, dass die zweite Trajektorie während des zweiten Parkvorgangs verworfen wird, wenn eine dynamische Anpassung nicht gewünscht, nicht möglich oder nicht genau genug ist.

In einer Ausführungsform weist die zweite Trajektorie eine Startposition auf, die zu einer Startposition der ersten Trajektorie versetzt ist, insbesondere in einer Richtung zu einer Endposition der zweiten Trajektorie versetzt ist. Das Verfahren weist ferner das Ermitteln einer Anfahrtrajektorie zum Erreichen der Startposition der zweiten Trajektorie ausgehend von einer Ausgangsposition des Kraftfahrzeugs zu Beginn des zweiten Parkvorgangs auf. Das Kraftfahrzeug wird dann insbesondere zumindest teilweise automatisch und/oder unter Vorgabe von Lenk- und/oder Geschwindigkeitsanweisungen entsprechend der Anfahrtrajektorie von der Ausgangsposition zu der Startposition der zweiten Trajektorie geführt. Dies ermöglicht es, eine Streuung der Ausgangspositionen bei unterschiedlichen Parkvorgängen zu berücksichtigen. Das Kraftfahrzeug wird von der jeweiligen Ausgangsposition zu der gleichen Startposition geführt und von der Startposition entlang der zweiten Trajektorie geführt.

In einer weiteren Ausführungsform weist die zweite Trajektorie an der Startposition eine Startausrichtung auf. Die Anfahrtrajektorie wird so ermittelt, dass das Kraftfahrzeug entsprechend der Anfahrtrajektorie so von der Ausgangsposition zu der Startposition geführt wird, dass das Kraftfahrzeug in der Startposition die Startausrichtung einnimmt. Damit wird verhindert, dass das Kraftfahrzeug in der Startposition eine Ausrichtung aufweist, die ein genaues Folgen der zweiten Trajektorie zu Beginn der zweiten Trajektorie erschweren oder verhindern kann.

In einer weiteren Ausführungsvariante weist das Verfahren das Invertieren der zweiten Trajektorie zur Anzeige und/oder Unterstützung bei einem weiteren, zu dem ersten Parkvorgang inversen Parkvorgang, insbesondere einem Ausparkvorgang, auf. Damit kann die zweite Trajektorie nicht nur bei gleichartigen Parkvorgängen wie beim ersten Parkvorgang verwendet werden, sondern auch bei umgekehrten Parkvorgängen. Ist der erste Parkvorgang beispielsweise ein Einparkvorgang, so kann der zweite Parkvorgang ebenfalls ein Einparkvorgang oder ein Ausparkvorgang in der gleichen Parkumgebung sein.

Die Erfindung betrifft ferner ein Parkassistenzsystem für ein Kraftfahrzeug. Das Parkassistenzsystem weist eine Steuereinheit auf, die dazu ausgebildet ist, das Verfahren wie hierin offenbart auszuführen.

Dazu kann das Parkassistenzsystem zusätzlich insbesondere die folgenden Komponenten aufweisen. Das Parkassistenzsystem kann eine Umgebungserfassungssensorik, insbesondere ein Kamerasystem und/oder ein oder mehrere Abstandssensoren, vorzugsweise Radarsensoren, Lasersensoren und/oder Ultraschallsensoren, zur Erfassung der Umgebungsdaten aufweisen. Das Parkassistenzsystem kann eine Standortbestimmungsvorrichtung, insbesondere eine GPS-Vorrichtung, zur Erfassung eines Standorts des Kraftfahrzeugs zur Erfassung der ersten Trajektorie aufweisen. Das Parkassistenzsystem kann einen Lenkwinkelsensor zur Erfassung eines Lenkwinkels des Kraftfahrzeugs zur Erfassung der ersten Trajektorie aufweisen. Das Parkassistenzsystem kann einen Fahrzeuggeschwindigkeitssensor zur Erfassung einer Fahrzeuggeschwindigkeit des Kraftfahrzeugs zur Erfassung der ersten Trajektorie aufweisen. Das Parkassistenzsystem kann eine Benutzerschnittstelle aufweisen.

Die Erfindung betrifft ferner ein Kraftfahrzeug, insbesondere ein Nutzfahrzeug, das das Parkassistenzsystem wie hierin offenbart aufweist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht eines Kraftfahrzeugs mit einem Parkassistenzsystem;
- Figur 2: eine schematische Draufsicht auf einen Parkvorgang, bei dem ein Verfahren zum Betrieb eines Kraftfahrzeugs gemäß der vorliegenden Offenbarung verwendet wird;
- Figur 3: eine schematische Draufsicht auf einen weiteren Parkvorgang, bei dem das Verfahren zum Betrieb eines Kraftfahrzeugs gemäß der vorliegenden Offenbarung verwendet wird; und
- Figur 4: eine schematische Draufsicht auf einen weiteren Parkvorgang, bei dem das Verfahren zum Betrieb eines Kraftfahrzeugs gemäß der vorliegenden Offenbarung verwendet wird.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

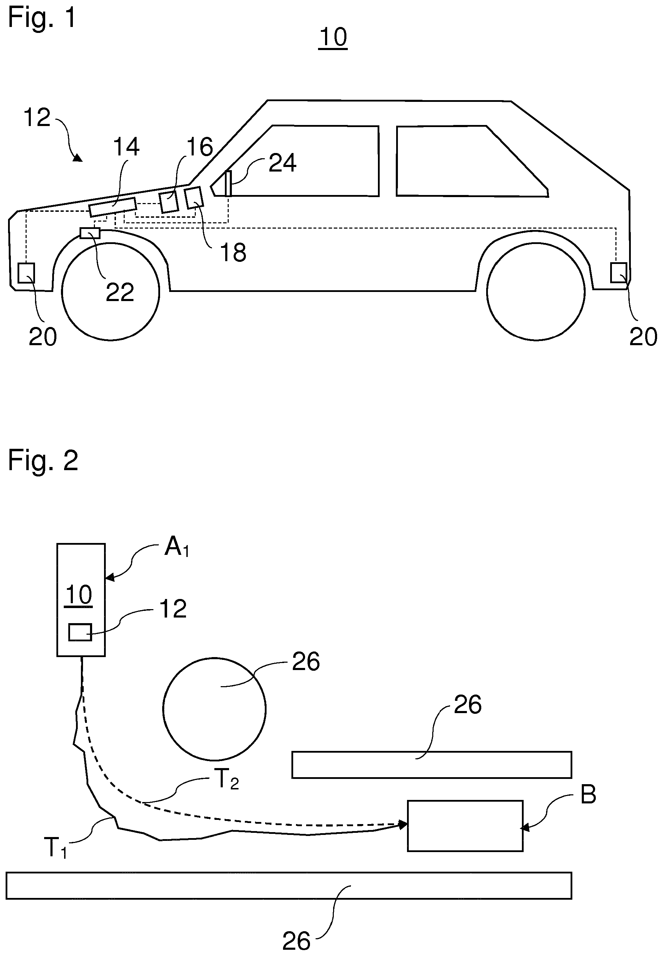

Die Figur 1 zeigt ein Kraftfahrzeug 10. Das Kraftfahrzeug 10 ist als ein Personenkraftwagen ausgebildet. Alternativ kann das Kraftfahrzeug 10 beispielsweise als ein Nutzfahrzeug, insbesondere ein Lastkraftwagen oder ein Omnibus, ausgebildet sein. Das hierin offenbarte Verfahren und das hierin offenbarte Parkassistenzsystem können besonders vorteilhaft beim Rangieren eines Nutzfahrzeugs auf engen Betriebshöfen verwendet werden.

Das Kraftfahrzeug 10 weist ein Parkassistenzsystem 12 auf. Das Parkassistenzsystem 12 weist eine Steuereinheit 14 auf und kann zusätzlich eine oder eine Mehrzahl von mit der Steuereinheit 14 zusammenarbeiteten Komponenten 16 - 24 aufweisen. Die Steuereinheit 14 ist dazu ausgebildet, ein Verfahren zum Betrieb des Kraftfahrzeugs 10 wie hierin offenbart durchzuführen.

Die in dem dargestellten Ausführungsbeispiel mit der Steuereinheit 14 zusammenarbeiteten Komponenten weisen eine Standortbestimmungsvorrichtung 16, einen Lenkwinkelsensor 18, eine Umgebungserfassungssensorik 20, einen Fahrzeuggeschwindigkeitssensor 22 und eine Benutzerschnittstelle 24 auf.

Die Standortbestimmungsvorrichtung 16 ist dazu ausgebildet, einen Standort des Kraftfahrzeugs 10 zu bestimmen. Beispielsweise kann die Standortbestimmungsvorrichtung 16 als eine GPS-Vorrichtung ausgebildet sein. Die Standortbestimmungsvorrichtung 16 kann den bestimmten Standort des Kraftfahrzeugs 10 zu der Steuereinheit 14 ausgeben.

Der Lenkwinkelsensor 18 ist dazu ausgebildet, einen Lenkwinkel des Kraftfahrzeugs 10 zu erfassen und zu der Steuereinheit 14 auszugeben. Der Lenkwinkelsensor 18 kann beispielsweise mit einem Lenkrad des Kraftfahrzeugs 10 verbunden sein oder eine Drehzahldifferenz zwischen den Vorderrädern des Kraftfahrzeugs 10 auswerten.

Die Umgebungserfassungssensorik 20 ist dazu ausgebildet, eine Umgebung des Kraftfahrzeugs 10 zu erfassen und entsprechende Umgebungsdaten an die Steuereinheit 14 auszugeben. Basierend auf den Umgebungsdaten können insbesondere Hindernisse und hindernisfreie Bereiche im Umfeld des Kraftfahrzeugs 10 ermittelt werden. Die Umgebungserfassungssensorik 20 kann beispielsweise ein Kamerasystem mit einer oder einer Mehrzahl von Kameras aufweisen. Alternativ oder zusätzlich kann die Umgebungserfassungssensorik 20 einen oder eine Mehrzahl von Abstandssensoren, insbesondere Parksensoren, aufweisen. Als Abstandssensoren können insbesondere Ultraschallsensoren, Radarsensoren oder Lasersensoren verwendet werden.

Der Fahrzeuggeschwindigkeitssensor 22 ist dazu ausgebildet, eine Fahrzeuggeschwindigkeit des Kraftfahrzeugs 10 zu erfassen und zu der Steuereinheit 14 auszugeben. Der Fahrzeuggeschwindigkeitssensor 22 kann beispielsweise ein Drehzahlsensor sein, der eine Drehzahl eines Rads des Kraftfahrzeugs 10 misst.

Die Steuereinheit 14 kann basierend auf den empfangenen Daten von der Standortbestimmungsvorrichtung 16, dem Lenkwinkelsensor 18, dem Fahrzeuggeschwindigkeitssensor 22 und/oder weiteren nicht näher dargestellten Sensoren eine Trajektorie des Kraftfahrzeugs 10 erfassen, entlang der sich das Kraftfahrzeug 10 bewegt. Die Steuereinheit 14 weist zusätzlich eine Speichereinheit zum Aufzeichnen der Trajektorie auf.

Die Benutzerschnittstelle 24 ist dazu ausgebildet, Informationen von der Steuereinheit 14 an einen Benutzer des Kraftfahrzeugs 10, insbesondere einen Fahrer des Kraftfahrzeugs 10, auszugeben. Die Informationen können akustisch, haptisch und/oder visuell an den Benutzer ausgegeben werden. Die Benutzerschnittstelle 24 kann ferner von dem Benutzer für Eingaben verwendet werden, die zu der Steuereinheit 14 geleitet werden. Die Benutzerschnittstelle 24 kann beispielsweise eine Anzeige und eine Mehrzahl von Bedienungselementen aufweisen. Die Benutzerschnittstelle 24 kann auch als berührungsempfindliche Anzeige vorgesehen sein.

Die Figur 2 zeigt das Kraftfahrzeug 10 in einer schematischen Draufsicht bei einem ersten Parkvorgang in einer insbesondere für ein Nutzfahrzeug anspruchsvollen Parkumgebung (Parkzone), zum Beispiel ein Betriebshof. Im dargestellten Ausführungsbeispiel ist der erste Parkvorgang ein Einparkvorgang. Es ist allerdings ebenso denkbar, dass der erste Parkvorgang ein Ausparkvorgang ist.

Der Fahrer des Kraftfahrzeugs 10 führt das Kraftfahrzeug 10 manuell aus einer Ausgangsposition A in eine Zielposition B. Dabei umfährt der Fahrer des Kraftfahrzeugs 10 eines oder mehrere Hindernisse 26. Im Einzelnen fährt der Fahrer das Kraftfahrzeug 10 entlang einer ersten Trajektorie T₁. Während des ersten Parkvorgangs wird die erste Trajektorie T₁ von dem Parkassistenzsystem 12 (vgl. Figur 1) erfasst und aufgezeichnet. Je nach Geschick des Fahrers des Kraftfahrzeugs 10 kann die erste Trajektorie T₁ eine Vielzahl von Lenkwinkeländerungen aufweisen, wie in Figur 2 anhand des Zickzackpfads der ersten Trajektorie T₁ zur besseren Verständlichkeit übertrieben dargestellt ist.

Während des ersten Parkvorgangs werden zusätzlich Umgebungsdaten der Parkumgebung von dem Parkassistenzsystem 12 erfasst und abgespeichert. Insbesondere werden die Positionen und Abmessungen der Hindernisse 26 erfasst und abgespeichert.

Typischerweise ist die von dem Fahrer gefahrene erste Trajektorie T₁ verbesserungsfähig. Zur Unterstützung des Fahrers bei einem weiteren Parkvorgang in der gleichen Parkumgebung kann das Parkassistenzsystem 12 eine zweite (verbesserte) Trajektorie T₂ bestimmen. Die zweite Trajektorie T₂ weist eine Endposition auf, die im Wesentlichen einer Endposition der ersten Trajektorie T₁ entspricht. Zusätzlich weist die zweite Trajektorie T₂ eine Endausrichtung auf, die im Wesentlichen einer Endausrichtung der ersten Trajektorie T₁ entspricht.

Das Bestimmen einer zweiten Trajektorie T₂ kann insbesondere durch Anwenden eines Glättungsverfahrens auf die erste Trajektorie T₁ durchgeführt werden. Im Einzelnen kann beispielsweise eine Spline-Interpolation auf die erste Trajektorie T₁ angewendet werden. Dazu können Stützstellen in der ersten Trajektorie T₁ bestimmt und die erste Trajektorie T₁ mithilfe stückweise stetiger Polynome (Splines) entlang der Stützstellen interpoliert werden. Im Ergebnis erhält man eine geglättete Trajektorie, entlang deren Verlauf das Kraftfahrzeug 10 zur Endposition B geführt werden kann. Als Spline-Interpolation kann insbesondere eine kubische Spline-Interpolation verwendet werden. Durch die Berücksichtigung kleinster Krümmungen oder "Biegeenergien" der Splines kann ein Aufschwingen der Splines verhindert werden. In anderen Ausführungsformen können andere Glättungsverfahren zum Glätten der ersten Trajektorie T₁ verwendet werden.

Das Bestimmen einer zweiten Trajektorie T₂ kann ferner insbesondere durch Anpassen der aufgezeichneten ersten Trajektorie T₁ an die erfassten Umgebungsdaten durchgeführt werden. Aus den während des ersten Parkvorgangs erfassten Umgebungsdaten können die Standorte und Abmessungen von hindernisfreien Bereichen und Hindernissen in der Parkumgebung ermittelt werden.

Die aufgezeichnete erste Trajektorie T₁ kann nun beispielsweise innerhalb der als hindernisfrei ermittelten Bereiche verkürzt werden. Hierbei kann beispielsweise ein vorgegebener Mindestsicherheitsabstand, z. B. 0,2 m, zu den ermittelten Hindernissen berücksichtigt werden. Beim Verkürzen können insbesondere unnötige Vor- und Zurücksetzbewegungen des Kraftfahrzeugs beseitigt werden.

Ebenso ist es möglich, dass die aufgezeichnete erste Trajektorie T₁ dahingehend geprüft oder angepasst wird, dass stets ein vorgegebener Mindestsicherheitsabstand zu den ermittelten Hindernissen eingehalten wird.

Es ist auch denkbar, dass wenn die erste Trajektorie T₁ zwischen zwei Hindernissen verläuft, die erste Trajektorie T₁ dahingehend angepasst wird, dass die Abstände zwischen der Trajektorie und beiden Hindernissen ungefähr gleich groß sind.

Es versteht sich, dass die Anwendung des Glättungsverfahrens und die Anpassung an die erfassten Umgebungsbedingungen zum Bestimmen der zweiten Trajektorie T₂ kombiniert werden können. Das Glättungsverfahren kann vor und/oder nach der Anpassung an die erfassten Umgebungsbedingungen zum Bestimmen der zweiten Trajektorie T₂ verwendet werden. Die geglättete Trajektorie verläuft insbesondere nur in den hindernisfreien Bereichen.

Die zweite Trajektorie T₂ kann bei einem zweiten Parkvorgang in der gleichen Parkumgebung zur Unterstützung des Fahrers verwendet werden. Das Parkassistenzsystem 12 kann automatisch erkennen, wenn das Kraftfahrzeug 10 sich der gleichen Parkumgebung wie beim ersten Parkvorgang nähert oder in diese einfährt. Dies kann beispielsweise mittels einer fortwährenden Standortbestimmung durch die Standortbestimmungsvorrichtung 16 (siehe Figur 1) ermöglicht werden. Alternativ oder ergänzend kann ein Benutzer des Kraftfahrzeugs 10 über die Bedienerschnittstelle 24 eine entsprechende Eingabe tätigen.

Die zweite Trajektorie T₂ kann dem Fahrer des Kraftfahrzeugs 10 zur Unterstützung bei einem zweiten Parkvorgang in der gleichen Parkumgebung beispielsweise über die Benutzerschnittstelle 24 (siehe Figur 1) bereitgestellt werden. Die erste Trajektorie T₁ und die zweite Trajektorie T₂ können beispielsweise auf einer Anzeige der Benutzerschnittstelle 24 angezeigt werden. Der Benutzer kann insbesondere die zweite Trajektorie T₂ verwerfen oder abspeichern.

In einem Ausführungsbeispiel kann ein Benutzer des Kraftfahrzeugs die zweite Trajektorie T₂ manuell über eine Eingabe auf der Benutzerschnittstelle 24 anpassen, z. B. über eine Wischbewegung. Die manuelle Anpassung der zweiten Trajektorie T₂ kann zu jeglichem Zeitpunkt nach dem ersten Parkvorgang und vor oder während des zweiten Parkvorgangs durchgeführt werden. Insbesondere kann die manuelle Anpassung der zweiten Trajektorie T₂ nur innerhalb der als hindernisfrei ermittelten Bereiche ermöglicht werden.

Das Parkassistenzsystem 12 kann den Fahrer des Kraftfahrzeugs 10 je nach Ausstattung unterschiedlich beim zweiten Parkvorgang in der gleichen Parkumgebung anhand der zweiten Trajektorie T₂ unterstützen.

Das Parkassistenzsystem 12 kann das Kraftfahrzeug 10 beispielsweise autonom, d. h. vollautomatisch, entlang der zweiten Trajektorie T₂ führen. Der Fahrer des Kraftfahrzeugs 10 kann beispielsweise über eine Bedienereingabe einen solchen Modus aktivieren.

In einem anderen Ausführungsbeispiel kann das Parkassistenzsystem 12 das Kraftfahrzeug 10 teilweise automatisch entlang der zweiten Trajektorie T₂ führen. Insbesondere kann das Parkassistenzsystem 12 ein System zum Verändern des Lenkwinkels des Kraftfahrzeugs 10 aufweisen, zum Beispiel eine elektrische Servolenkung. Das Parkassistenzsystem 12 kann somit die Lenkaufgabe während des zweiten Parkvorgangs entsprechend der zweiten Trajektorie T₂ übernehmen. Der Fahrer des Kraftfahrzeugs 10 gibt lediglich Gas und bremst in der Endposition.

In einem weiteren Ausführungsbeispiel kann das Parkassistenzsystem 12 dem Fahrer des Kraftfahrzeugs 10 Lenk- und Geschwindigkeitsvorgaben machen, sodass der Fahrer das Kraftfahrzeug 10 auf einfache Weise entlang der zweiten Trajektorie T₂ führen kann. Dem Fahrer können die Anweisungen über die Benutzerschnittstelle 24 akustisch, visuell und/oder haptisch ausgegeben werden. Dies kann zum Beispiel über eine Balken- oder Winkelgrafik geschehen, die Soll- und Ist-Lenkeinschlag visualisiert.

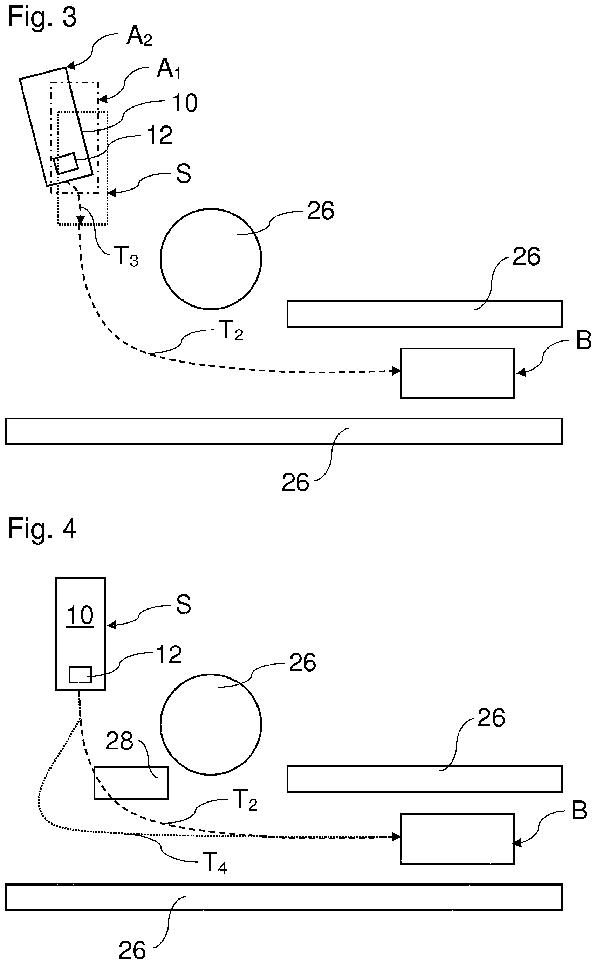

Unter Bezugnahme auf Figur 3 ist eine vorteilhafte Weiterbildung des Parkassistenzsystems 12 beschrieben.

In der Figur 3 ist eine Situation gezeigt, in der das Kraftfahrzeug 10 für einen zweiten Parkvorgang in die gleiche Parkumgebung wie beim ersten Parkvorgang einfährt. Der zweite Parkvorgang liegt zeitlich hinter dem ersten Parkvorgang. Eine Ausgangsposition A₂ (und eine Ausgangsausrichtung) des Kraftfahrzeugs 10 vor dem zweiten Parkvorgang unterscheidet sich von einer Ausgangsposition A₁ (und einer Ausgangsausrichtung) des Kraftfahrzeugs 10 vor dem ersten Parkvorgang. Diese Situation wird in der Praxis häufig auftreten.

Damit das Kraftfahrzeug 10 durch das Parkassistenzsystem 12 entlang der zweiten Trajektorie T₂ geführt werden kann, wird für die zweite Trajektorie T₂ eine versetzte Startposition S definiert. Die Startposition S ist zu der Ausgangsposition A₁ und der Ausgangsposition A₂ versetzt. Insbesondere ist die Startposition S in Richtung zu der Endposition B der zweiten Trajektorie T₂ versetzt. Mit anderen Worten gesagt, ist die Startposition S dichter an der Endposition B angeordnet. Zum Beispiel kann die Startposition S um 1 m oder 2 m von der Ausgangsposition A₂ versetzt sein.

Das Parkassistenzsystem 12 ermittelt vor dem zweiten Parkvorgang eine Anfahrtrajektorie T₃. Die Anfahrtrajektorie T₃ verbindet die Ausgangsposition A₂ und die Startposition S. Der Fahrer des Kraftfahrzeugs 10 kann nun von dem Parkassistenzsystem 12 von der Ausgangsposition A₂ zu der Startposition S geführt werden. In einigen Ausführungsformen kann das Kraftfahrzeug 10 von dem Parkassistenzsystem 12 automatisch oder zumindest teilweise automatisch von der Ausgangsposition A₂ in die Startposition S geführt werden. Bei Erreichen der Startposition ist das Kraftfahrzeug 10 vorzugsweise bereits in einer für die zweite Trajektorie T₂ erforderlichen Startausrichtung des Kraftfahrzeugs 10. Anschließend kann das Kraftfahrzeug 10 entlang der zweiten Trajektorie T₂ bis in die Endposition B geführt werden.

Unter Bezugnahme auf Figur 4 ist eine weitere vorteilhafte Weiterbildung des Parkassistenzsystems 12 beschrieben.

In der Figur 4 ist eine Situation gezeigt, in der das Kraftfahrzeug 10 für einen weiteren Parkvorgang in die gleiche Parkumgebung wie beim ersten Parkvorgang eingefahren und bereits zur Startposition S geführt wurde. Allerdings hat sich die Parkumgebung in der Zwischenzeit verändert. Ein neues Hindernis 28 liegt direkt im Wege der zweiten Trajektorie T₂.

Beim Führen des Kraftfahrzeugs 10 entlang der zweiten Trajektorie T₂ wird das Hindernis 28 von der Umgebungserfassungssensorik 20 (siehe Figur 1) des Kraftfahrzeugs 10 erfasst. Würde sich das Kraftfahrzeug 10 bis zu der Endposition B entlang der zweiten Trajektorie T₂ bewegen, so käme es zu einer Kollision mit dem Hindernis 28.

Auf das neue Hindernis 28 kann unterschiedlich reagiert werden. Die zweite Trajektorie T₂ kann beispielsweise während des zweiten Parkvorgangs dynamisches aktualisiert werden, sodass das Hindernis 28 umgangen wird. Eine derartig aktualisierte Trajektorie ist in der Figur 4 mit T₄ bezeichnet. Die aktualisierte Trajektorie T₄ kann je nach Benutzerwunsch die zweite Trajektorie T₂ überschreiben oder nicht. Die aktualisierte Trajektorie T₄ kann auch alternativ zur zweiten Trajektorie T₂ abgespeichert werden.

Z. B. kann es sich beim Hindernis 28 um eine bewegbares Hindernis wie eine Mülltonne, die einfach verschiebbar ist, handeln. Hier wäre kein Überschreiben der zweiten Trajektorie T₂ und Abspeichern der aktualisierten Trajektorie T₄ nötig. Gemäß einem weiteren Beispiel könnte das Hindernis 28 ein anderes Fahrzeug sein. Hierbei handelt es sich ebenfalls um eine einmalige Situation, wodurch kein Überschreiben der zweiten Trajektorie T₂ und Abspeichern der aktualisierten Trajektorie T₄ nötig ist. Als letztes Beispiel kann es sich beim Hindernis 28 bspw. auch um eine temporäre Baustelle handeln. Hier ist es insbesondere sinnvoll, die aktualisierte Trajektorie T₄ als Alternative zur zweiten Trajektorie T₂ abzuspeichern.

Die Erfassung des Hindernisses 28 kann ebenso zu einem Abbruch des geführten zweiten Parkvorgangs führen. Hierbei wird die zweite Trajektorie T₂ (temporär) verworfen und der Fahrer aufgefordert, das Kraftfahrzeug 10 selbstständig einzuparken.

In einem weiteren, nicht näher dargestellten Ausführungsbeispiel kann die zweite Trajektorie T₂ auch für einen zum ersten Parkvorgang inversen Parkvorgang verwendet werden. D. h., wenn der erste Parkvorgang ein Einparkvorgang war, kann der zweite Parkvorgang ein Ausparkvorgang sein und vice versa. Das Parkassistenzsystem 12, insbesondere die Steuereinheit 14 (siehe Figur 1), kann die zweite Trajektorie T₂ dazu invertieren.

Die Erfindung beansprucht Schutz für den Gegenstand und die Merkmale der Ansprüche.

### Bezugszeichenliste

- 10: Kraftfahrzeug
- 12: Parkassistenzsystem
- 14: Steuereinheit
- 16: Standortbestimmungsvorrichtung
- 18: Lenkwinkelsensor
- 20: Umgebungserfassungssensorik
- 22: Fahrzeuggeschwindigkeitssensor
- 24: Benutzerschnittstelle
- 26, 28: Hindernis
- A₁: Ausgangsposition beim ersten Parkvorgang
- A₂: Ausgangsposition beim zweiten Parkvorgang
- B: Endposition (Parkposition)
- S: Startposition der zweiten Trajektorie
- T₁: Erste Trajektorie
- T₂: Zweite Trajektorie
- T₃: Anfahrtrajektorie
- T₄: Aktualisierte (zweite) Trajektorie

## Patentansprüche

1. Verfahren zum Betrieb eines Kraftfahrzeugs (10), insbesondere eines Nutzfahrzeugs, aufweisend:
manuelles Einparken oder Ausparken des Kraftfahrzeugs (10) entlang einer ersten Trajektorie (T₁) während eines ersten Parkvorgangs, insbesondere eines Einparkvorgangs;
Erfassen der ersten Trajektorie (T₁) während des ersten Parkvorgangs; und
Bestimmen einer zweiten Trajektorie (T₂) durch Anwenden eines Glättungsverfahrens auf die erste Trajektorie (T₁) und/oder durch Anpassen der ersten Trajektorie (T₁) an während des ersten Parkvorgangs erfasste Umgebungsdaten, insbesondere an aus den erfassten Umgebungsdaten ermittelte Hindernisse (26) und/oder hindernisfreie Bereiche.

2. Verfahren nach Anspruch 1, ferner aufweisend:
Bereitstellen der zweiten Trajektorie (T₂) zur Unterstützung eines Fahrers bei einem zweiten Parkvorgang; und/oder
Anzeigen der ersten Trajektorie (T₁) und/oder der zweiten Trajektorie (T₂).

3. Verfahren nach Anspruch 1 oder Anspruch 2, wobei das Anwenden des Glättungsverfahrens das Verwenden einer Spline-Interpolation, insbesondere einer kubischen Spline-Interpolation, aufweist.

4. Verfahren nach einem der vorherigen Ansprüche, ferner aufweisend:
Erfassen von Umgebungsdaten während des ersten Parkvorgangs;
Ermitteln von hindernisfreien Bereichen und/oder Hindernissen (26) aus den während des ersten Parkvorgangs erfassten Umgebungsdaten.

5. Verfahren nach einem der vorherigen Ansprüche, wobei das Anpassen der ersten Trajektorie (T₁) an die während des ersten Parkvorgangs erfassten Umgebungsdaten eine Verkürzung der ersten Trajektorie (T₁) innerhalb der ermittelten hindernisfreien Bereiche und/oder eine Anpassung der ersten Trajektorie (T₁) zur Einhaltung eines vorgegebenen Mindestsicherheitsabstands zu den ermittelten Hindernissen (26) aufweist.

6. Verfahren nach einem der vorherigen Ansprüche, ferner aufweisend manuelles Anpassen der zweiten Trajektorie (T₂), wobei das manuelle Anpassen der zweiten Trajektorie (T₂) insbesondere nur innerhalb der als hindernisfrei ermittelten Bereiche ermöglicht wird.

7. Verfahren nach einem der vorherigen Ansprüche, wobei die zweite Trajektorie (T₂) eine Endposition, die im Wesentlichen einer Endposition der ersten Trajektorie (T₁) entspricht, und/oder eine Endausrichtung, die im Wesentlichen einer Endausrichtung der ersten Trajektorie (T₁) entspricht, aufweist.

8. Verfahren nach einem der vorherigen Ansprüche, wobei
das Erfassen der ersten Trajektorie (T₁) das Erfassen von Lenkwinkeln des Kraftfahrzeugs (10), Positionsdaten des Kraftfahrzeugs (10) und/oder Fahrzeuggeschwindigkeiten des Kraftfahrzeugs (10) während des ersten Parkvorgangs aufweist; und/oder
ein Beginn des Erfassens der ersten Trajektorie (T₁) und/oder ein Ende des Erfassens der ersten Trajektorie (T₁) von einem Benutzer auslösbar ist.

9. Verfahren nach einem der vorherigen Ansprüche, ferner aufweisend:
automatisches oder teilweise automatisches Führen des Kraftfahrzeugs (10) entlang der zweiten Trajektorie (T₂) während eines zweiten Parkvorgangs, wobei das teilweise automatische Führen des Kraftfahrzeugs (10) insbesondere das automatische Lenken des Kraftfahrzeugs (10) zum Folgen der zweiten Trajektorie (T₂) aufweist; und/oder
Vorgeben von Lenk- und/oder Geschwindigkeitsanweisungen an einen Benutzer des Kraftfahrzeugs (10) entsprechend der zweiten Trajektorie (T₂) während eines zweiten Parkvorgangs, wobei die Lenk- und/oder Geschwindigkeitsanweisungen insbesondere visuell, akustisch und/oder haptisch ausgegeben werden.

10. Verfahren nach Anspruch 9, ferner aufweisend:
Erfassen von Umgebungsdaten während des zweiten Parkvorgangs; und
dynamisches Anpassen der zweiten Trajektorie (T₂) während des zweiten Parkvorgangs an die während des zweiten Parkvorgangs erfassten Umgebungsdaten oder Verwerfen der zweiten Trajektorie (T₂) während des zweiten Parkvorgangs.

11. Verfahren nach einem der vorherigen Ansprüche, wobei:
die zweite Trajektorie (T₂) eine Startposition (S) aufweist, die zu einer Startposition der ersten Trajektorie (T₁) versetzt ist, insbesondere in einer Richtung zu einer Endposition der zweiten Trajektorie (T₂) versetzt ist; und
das Verfahren ferner aufweist:
Ermitteln einer Anfahrtrajektorie (T₃) zum Erreichen der Startposition (S) der zweiten Trajektorie (T₂) ausgehend von einer Ausgangsposition (A₂) des Kraftfahrzeugs (10) zu Beginn des zweiten Parkvorgangs, wobei das Kraftfahrzeug (10) insbesondere zumindest teilweise automatisch und/oder unter Vorgabe von Lenk- und/oder Geschwindigkeitsanweisungen entsprechend der Anfahrtrajektorie (T₃) von der Ausgangsposition (A2) zu der Startposition (S) der zweiten Trajektorie (T₂) geführt wird.

12. Verfahren nach Anspruch 11, wobei die zweite Trajektorie (T₂) an der Startposition (S) eine Startausrichtung aufweist und die Anfahrtrajektorie (T₃) so ermittelt wird, dass das Kraftfahrzeug (10) entsprechend der Anfahrtrajektorie (T₃) so von der Ausgangsposition (A2) zu der Startposition (S) geführt wird, dass das Kraftfahrzeug (10) in der Startposition (S) die Startausrichtung einnimmt.

13. Verfahren nach einem der vorherigen Ansprüche, ferner aufweisend:
Invertieren der zweiten Trajektorie (T₂) zur Anzeige und/oder Unterstützung bei einem weiteren, zu dem ersten Parkvorgang inversen Parkvorgang, insbesondere einem Ausparkvorgang.

14. Parkassistenzsystem (12) für ein Kraftfahrzeug (10), mit
einer Steuereinheit (14), die dazu ausgebildet ist, das Verfahren nach einem der vorherigen Ansprüche auszuführen;
und optional mit:
einer Umgebungserfassungssensorik (20), insbesondere ein Kamerasystem und/oder ein oder mehrere Abstandssensoren, vorzugsweise Radarsensoren, Lasersensoren und/oder Ultraschallsensoren, zur Erfassung der Umgebungsdaten;
einer Standortbestimmungsvorrichtung (16), insbesondere eine GPS-Vorrichtung, zur Erfassung eines Standorts des Kraftfahrzeugs (10) zur Erfassung der ersten Trajektorie;
einem Lenkwinkelsensor (18) zur Erfassung eines Lenkwinkels des Kraftfahrzeugs (10) zur Erfassung der ersten Trajektorie;
einem Fahrzeuggeschwindigkeitssensor (22) zur Erfassung einer Fahrzeuggeschwindigkeit des Kraftfahrzeugs (10) zur Erfassung der ersten Trajektorie; und/oder
einer Benutzerschnittstelle (24).

15. Kraftfahrzeug (10), insbesondere Nutzfahrzeug, aufweisend das Parkassistenzsystem (12) nach Anspruch 14.

## Claims

1. A method for operating a motor vehicle (10), in particular a utility vehicle, comprising:
manually entering or leaving a parking space with the motor vehicle (10) along a first trajectory (T₁) during a first parking procedure, in particular a parking procedure for entering a parking space;
recording the first trajectory (T₁) during the first parking procedure; and
establishing a second trajectory (T₂) by applying a smoothing method to the first trajectory (T₁) and/or by adjusting the first trajectory (T₁) to surroundings data recorded during the first parking procedure, in particular to obstacles (26) and/or obstacle-free regions determined from the recorded surroundings data.

2. The method according to Claim 1, furthermore comprising:
providing the second trajectory (T₂) for assisting a driver in a second parking procedure; and/or
displaying the first trajectory (T₁) and/or the second trajectory (T₂).

3. The method according to Claim 1 or Claim 2, wherein applying the smoothing method comprises using a spline interpolation, in particular a cubic spline interpolation.

4. The method according to one of the preceding claims, furthermore comprising:
recording surroundings data during the first parking procedure;
determining obstacle-free regions and/or obstacles (26) from the surroundings data recorded during the first parking procedure.

5. The method according to one of the preceding claims, wherein adjusting the first trajectory (T₁) to the surroundings data recorded during the first parking procedure comprises shortening the first trajectory (T₁) within the determined obstacle-free regions and/or adjusting the first trajectory (T₁) so as to comply with a predefined minimum safety distance from the determined obstacles (26).

6. The method according to one of the preceding claims, furthermore comprising manually adjusting the second trajectory (T₂), wherein manually adjusting the second trajectory (T₂) is allowed in particular only within the regions determined as being obstacle-free.

7. The method according to one of the preceding claims, wherein the second trajectory (T₂) comprises an end position that corresponds substantially to an end position of the first trajectory (T₁) and/or an end orientation that corresponds substantially to an end orientation of the first trajectory (T₁).

8. The method according to one of the preceding claims, wherein
recording the first trajectory (T₁) comprises recording steering angles of the motor vehicle (10), position data of the motor vehicle (10) and/or vehicle speeds of the motor vehicle (10) during the first parking procedure; and/or
a user is able to trigger the beginning of the recording of the first trajectory (T₁) and/or the end of the recording of the first trajectory (T₁).

9. The method according to one of the preceding claims, furthermore comprising:
automatically or partially automatically guiding the motor vehicle (10) along the second trajectory (T₂) during a second parking procedure, wherein partially automatically guiding the motor vehicle (10) in particular comprises automatically steering the motor vehicle (10) so as to follow the second trajectory (T₂); and/or
specifying steering instructions and/or speed instructions to a user of the motor vehicle (10) in accordance with the second trajectory (T₂) during a second parking procedure, wherein the steering instructions and/or speed instructions are output in particular visually, acoustically and/or haptically.

10. The method according to Claim 9, furthermore comprising:
recording surroundings data during the second parking procedure; and
dynamically adjusting the second trajectory (T₂) during the second parking procedure to the surroundings data recorded during the second parking procedure or discarding the second trajectory (T₂) during the second parking procedure.

11. The method according to one of the preceding claims, wherein:
the second trajectory (T₂) comprises a starting position (S) that is set to a starting position of the first trajectory (T₁), in particular is set in a direction towards an end position of the second trajectory (T₂); and
the method furthermore comprises:
determining an approach trajectory (T₃) for reaching the starting position (S) of the second trajectory (T₂) proceeding from an initial position (A₂) of the motor vehicle (10) at the beginning of the second parking procedure, wherein the motor vehicle (10) is guided, in particular at least partially automatically and/or with the specification of steering instructions and/or speed instructions, from the initial position (A₂) to the starting position (S) of the second trajectory (T₂) in accordance with the approach trajectory (T₃).

12. The method according to Claim 11, wherein the second trajectory (T₂) at the starting position (S) has a starting orientation and the approach trajectory (T₃) is determined such that the motor vehicle (10) is guided from the initial position (A₂) to the starting position (S) in accordance with the approach trajectory (T₃) such that the motor vehicle (10) adopts the starting orientation in the starting position (S).

13. The method according to one of the preceding claims, furthermore comprising:
inverting the second trajectory (T₂) for display and/or assistance purposes in a further parking procedure inverse to the first parking procedure, in particular a parking procedure for leaving a parking space.

14. A parking assistance system (12) for a motor vehicle (10), comprising
a control unit (14) that is designed to perform the method according to one of the preceding claims;
and optionally comprising:
a surroundings recording sensor system (20), in particular a camera system and/or one or more distance sensors, preferably radar sensors, laser sensors and/or ultrasound sensors for recording the surroundings data;
a location determination device (16), in particular a GPS device, for recording a location of the motor vehicle (10) in order to record the first trajectory;
a steering angle sensor (18) for recording a steering angle of the motor vehicle (10) in order to record the first trajectory;
a vehicle speed sensor (22) for recording a vehicle speed of the motor vehicle (10) in order to record the first trajectory; and/or
a user interface (24).

15. A motor vehicle (10), in particular utility vehicle, comprising the parking assistance system (12) according to Claim 14.

## Revendications

1. Procédé de conduite d'un véhicule automobile (10), en particulier d'un véhicule utilitaire, ledit procédé comprenant les étapes suivantes :
guider manuellement le véhicule automobile (10) le long d'une première trajectoire (T₁) de manière à lui faire prendre une place de stationnement, ou le sortir de celle-ci, pendant un premier processus de stationnement, en particulier un processus de prise de place de stationnement ;
détecter la première trajectoire (T₁) pendant le premier processus de stationnement ; et
déterminer une deuxième trajectoire (T₂) par application d'un procédé de lissage à la première trajectoire (T₁) et/ou par adaptation de la première trajectoire (T₁) à des données d'environnement acquises pendant le premier processus de stationnement, en particulier à des obstacles (26) et/ou des zones sans obstacles déterminés à partir des données d'environnement acquises.

2. Procédé selon la revendication 1, ledit procédé comprenant en outre les étapes suivantes :
fournir la deuxième trajectoire (T₂) pour assister un conducteur pendant un deuxième processus de stationnement ; et/ou
afficher la première trajectoire (T₁) et/ou la deuxième trajectoire (T₂).

3. Procédé selon la revendication 1 ou la revendication 2, l'application du procédé de lissage comprenant l'utilisation d'une interpolation spline, en particulier d'une interpolation spline cubique.

4. Procédé selon l'une des revendications précédentes, ledit procédé comprenant en outre les étapes suivantes :
acquérir des données d'environnement pendant le premier processus de stationnement ;
déterminer des zones sans obstacles et/ou des obstacles (26) à partir des données d'environnement acquises pendant le premier processus de stationnement.

5. Procédé selon l'une des revendications précédentes, l'adaptation de la première trajectoire (T₁) aux données d'environnement acquises pendant le premier processus de stationnement comportant un raccourcissement de la première trajectoire (T₁) à l'intérieur des zones sans obstacles déterminées et/ou une adaptation de la première trajectoire (T₁) pour maintenir une distance de sécurité minimale spécifiée par rapport aux obstacles (26) déterminés.

6. Procédé selon l'une des revendications précédentes, ledit procédé comprenant en outre une adaptation manuelle de la deuxième trajectoire (T₂), l'adaptation manuelle de la deuxième trajectoire (T₂) n'étant rendue possible notamment que dans les zones déterminées comme sans obstacles.

7. Procédé selon l'une des revendications précédentes, la deuxième trajectoire (T₂) ayant une position finale qui correspond sensiblement à une position finale de la première trajectoire (T₁), et/ou une orientation finale qui correspond sensiblement à une orientation finale de la première trajectoire (T₁).

8. Procédé selon l'une des revendications précédentes,
la détection de la première trajectoire (T₁) comprenant la détection d'angles de braquage du véhicule automobile (10), de données de position du véhicule automobile (10) et/ou de vitesses du véhicule automobile (10) pendant le premier processus de stationnement ; et/ou
un début de détection de la première trajectoire (T₁) et/ou une fin de détection de la première trajectoire (T₁) pouvant être déclenchés par un utilisateur.

9. Procédé selon l'une des revendications précédentes, ledit procédé comprenant en outre les étapes suivantes :
guider de manière automatique ou partiellement automatique le véhicule automobile (10) le long de la deuxième trajectoire (T₂) pendant un deuxième processus de stationnement, le guidage partiellement automatique du véhicule automobile (10) comprenant notamment la direction automatique du véhicule automobile (10) pour suivre la deuxième trajectoire (T₂) ; et/ou
spécifier des instructions de direction et/ou de vitesse à un utilisateur du véhicule automobile (10) selon la deuxième trajectoire (T₂) pendant un deuxième processus de stationnement, les instructions de direction et/ou de vitesse étant délivrées notamment de manière visuelle, acoustique et/ou haptique.

10. Procédé selon la revendication 9, ledit procédé comprenant en outre les étapes suivantes :
acquérir des données d'environnement pendant le deuxième processus de stationnement ; et
adapter dynamiquement la deuxième trajectoire (T₂) pendant le deuxième processus de stationnement aux données d'environnement acquises pendant le deuxième processus de stationnement ou rejeter la deuxième trajectoire (T₂) pendant le deuxième processus de stationnement.

11. Procédé selon l'une des revendications précédentes :
la deuxième trajectoire (T₂) ayant une position initiale (S) qui est décalée par rapport à une position initiale de la première trajectoire (T₁), en particulier décalée en direction d'une position finale de la deuxième trajectoire (T₂) ; et
le procédé comprenant en outre les étapes suivantes :
déterminer une trajectoire d'approche (T₃) afin d'atteindre la position initiale (S) de la deuxième trajectoire (T₂) à partir d'une position de départ (A₂) du véhicule automobile (10) au début du deuxième processus de stationnement, le véhicule automobile (10) étant guidé de la position de départ (A2) à la position initiale (S) de la deuxième trajectoire (T₂) notamment de manière au moins partiellement automatique et/ou avec spécification d'instructions de direction et/ou de vitesse en fonction de la trajectoire d'approche (T₃).

12. Procédé selon la revendication 11, la deuxième trajectoire (T₂) ayant à la position initiale (S) une orientation initiale et la trajectoire d'approche (T₃) étant déterminée de façon à guider le véhicule automobile (10) de la position de départ (A₂) à la position initiale (S) en fonction de la trajectoire d'approche (T₃) de sorte que le véhicule automobile (10) adopte l'orientation initiale dans la position de départ (S).

13. Procédé selon l'une des revendications précédentes, ledit procédé comprenant en outre les étapes suivantes :
inverser la deuxième trajectoire (T₂) pour l'affichage et/ou l'assistance lors d'un autre processus de stationnement qui est l'inverse du premier processus de stationnement, en particulier un processus de sortie de place de stationnement.

14. Système d'assistance au stationnement (12) destiné à un véhicule automobile (10), ledit système comprenant
une unité de commande (14) qui est conçue pour mettre en œuvre le procédé selon l'une des revendications précédentes ;
et éventuellement :
un ensemble de capteurs de détection d'environnement (20), en particulier un système de caméra et/ou un ou plusieurs capteurs de distance, de préférence capteurs radar, capteurs laser et/ou capteurs à ultrasons, destinés à acquérir les données d'environnement ;
un dispositif de localisation (16), en particulier un dispositif GPS, destiné à localiser le véhicule automobile (10) afin de détecter la première trajectoire ;
un capteur d'angle de braquage (18) destiné à détecter un angle de braquage du véhicule automobile (10) afin de détecter la première trajectoire ;
un capteur de vitesse de véhicule (22) destiné à détecter une vitesse du véhicule automobile (10) afin de détecter la première trajectoire ; et/ou
une interface utilisateur (24).

15. Véhicule automobile (10), en particulier véhicule utilitaire, comportant le système d'assistance au stationnement (12) selon la revendication 14.
